# EUROPÄISCHE PATENTSCHRIFT

(11) **EP 0 984 258 B1**
(45) Veröffentlichungstag und Bekanntmachung des Hinweises auf die Patenterteilung: **02.01.2002**
(21) Anmeldenummer: 99115793.4
(22) Anmeldetag: 11.08.1999
(51) Int. Cl.: G01L 19/00, G01L 9/00, G01L 19/14

(54) **Haltemittel zum Fixieren eines Drucksensors**
Pressure sensor mounting means
Moyen de montage d'un capteur de pression

(30) Priorität: 05.09.1998 DE 19840630
(43) Veröffentlichungstag der Anmeldung: 08.03.2000
(73) Patentinhaber: Mannesmann VDO Aktiengesellschaft, 60388 Frankfurt am Main (DE)
(72) Erfinder: Stiller, Rudolf, 61138 Niederdorfelden (DE); Schmidt, Norbert, 65817 Eppstein (DE)
(74) Vertreter: Rassler, Andrea, Dipl.-Phys.

(56) Entgegenhaltungen:
- US-A- 5 349 865

## Beschreibung

Die Erfindung betrifft einen Drucksensor mit einem Gehäuse, welches ein Haltemittel zum Fixieren des Drucksensors an einem an einer Öffnung angrenzenden Randbereich einer Behälterwand, insbesondere eines Kraftstoffbehälters, aufweist.

Solche Drucksensoren werden in heutigen Kraftfahrzeugen zunehmend zur Überwachung und zur Messwerterfassung in komplexen Systemen eingesetzt und müssen hierin höchste Ansprüche erfüllen. Die nach dem Stand der Technik bekannten Drucksensoren besitzen zumeist einen Stutzen, der durch die Öffnung in den Kraftstoffbehälter eingeführt wird und zur Abdichtung gegenüber dem Randbereich des Behälters außenseitig einen Dichtring trägt. Zur Befestigung besitzen solche Drucksensoren beispielsweise spezielle Flansche oder werden mittels des hierzu mit einem Außengewinde versehenen Stutzens in die Behälterwand eingeschraubt.

Nachteilig wirkt sich hierbei aus, dass der Dichtring bei unsachgemäßer Handhabung leicht beschädigt werden kann. Insbesondere kann ein nachlässiges Einsetzen des Drucksensors in die Öffnung zu einem Abgleiten des Dichtringes aus seiner vorbestimmten Position führen, so dass eine ausreichende Abdichtung nicht mehr gewährleistet ist. Im Extremfall kann es dabei auch zum Verlust des Dichtringes führen, wodurch Kraftstoff austreten und zu einer Gefährdung führen kann.

Weiterhin wirkt sich nachteilig aus, dass es durch die zur Befestigung des Drucksensors vorgesehenen Befestigungsmittel bei unsachgemäßer Handhabung leicht zu Beschädigungen kommen kann. Beispielsweise kann das Gehäuse des Drucksensors oder die Behälterwand bei zu großer Montagekraft verzogen werden. Hierdurch können Messfehler auftreten, deren Ursache nur schlecht feststellbar ist, wobei sich die Auslegung solcher Drucksensoren für vergleichsweise geringe Drücke und die damit besonders hohe Empfindlichkeit des Sensors gegenüber mechanischer Beschädigung hinderlich auswirkt.

Bei den nach dem Stand der Technik bekannten Drucksensoren wirkt sich ferner nachteilig aus, dass eine herkömmliche Abdichtung mittels eines Dichtringes zur Erfüllung der gestiegenen Anforderungen an die Permeationsdichtheit nicht ausreicht. Weitere konstruktive Maßnahmen an dem Drucksensor sind daher erforderlich, welche bei bekannten Drucksensoren zugleich mit erheblichem zusätzlichen Montageaufwand verbunden sind.

Es ist bereits daran gedacht worden, den Drucksensor mit dem Randbereich der Öffnung zu verkleben. Dies ist bisher in der Praxis jedoch daran gescheitert, dass die bekannten Klebstoffe gegenüber dem Kraftstoff keine ausreichende Beständigkeit aufweisen und daher eine dauerhafte Verbindung nicht erreicht werden kann.

Es wäre ferner auch vorstellbar, Kunststoffbauteile an Kraftstoffbehältern mit Hilfe des Ultraschall-Schweißverfahrens zu befestigen. Die Anwendung dieses Verfahrens bei Drucksensoren scheitert jedoch daran, dass die Ultraschallwellen im Inneren des Drucksensors zu einer Beschädigung der elektrischen Kontaktierung führen können, die sich entweder sofort oder erst während des Betriebes zum Ausfall des Drucksensors auswirken. Die Überprüfung des Drucksensors auf einwandfreie Funktion im Anschluss an den Schweißprozess ist dabei wenig hilfreich, da Drucksensoren weitgehend vormontiert und zumeist hermetisch verschlossen vom Hersteller bezogen werden, so dass eine gegebenenfalls erforderliche Reparatur des Drucksensors im allgemeinen den Austausch des kompletten Drucksensors erforderlich macht.

Der Erfindung liegt das Problem zugrunde, einen Drucksensor der eingangs genannten Art so zu gestalten, dass dieser besonders einfach mit dem Kraftstoffbehälter verbunden werden kann. Zugleich soll bei dem Drucksensor eine hohe Permeationsdichtheit ermöglicht und eine fehlerhafte Montage oder eine Beschädigung weitgehend ausgeschlossen werden.

Dieses Problem wird erfindungsgemäß dadurch gelöst, dass das Haltemittel einen für eine Reibschweißverbindung vorgesehenen, außenseitig an dem Gehäuse angeordneten und gegenüber diesem hervortretenden Rand hat. Einen solchen mit dem Rand versehenen Drucksensor kann man zur Befestigung relativ zu der Behälterwand auf deren Oberfläche hin- und herbewegen, so dass das thermoplastische Kunststoffmaterial erwärmt und schließlich flüssig wird. Nach dem Erkalten und Erstarren der so gewonnenen Schmelze entsteht eine hochfeste und dichte Verbindung. Auf zusätzliche Dichtungselemente, insbesondere Dichtungsringe, und Befestigungsmittels kann daher verzichtet werden. Eine Beschädigung des Drucksensors beim Einbau, wie auch der im Inneren des Drucksensors angeordneten Kontaktierungen, ist dabei weitgehend ausgeschlossen. Der Drucksensor kann beispielsweise mit seinem Stutzen durch die Öffnung in das Innere des Drucksensors hineinragen oder von außen auf den Randbereich des Behälters aufgesetzt sein, so dass auf den Stutzen verzichtet werden kann. Der erfindungsgemäße Drucksensor ist dadurch zugleich mit dem Behälter mühelos verschweißbar und kostengünstig in der Herstellung, wobei auch hohe Anforderungen an die Permeations-Dichtheit erfüllt werden.

Hierbei ist eine besonders vorteilhafte Weiterbildung der Erfindung dadurch gegeben, dass der Rand am Umfang des Gehäuses angeordnet ist. Hierdurch bildet der Rand eine Querschnittserweiterung des Drucksensors. Der Rand dient so zugleich auch als Anschlag für das durch die Öffnung in den Behälter einzuführende Gehäuse des Drucksensors. Weitere Fixiermittel zur Positionierung des Drucksensors sind daher nicht erforderlich.

Besonders günstig ist eine Weiterbildung der Erfindung, wenn der Rand eine auf die Behälterwand gerichtete Abwinkelung hat. Der während des Schweißvorganges entstehende Materialabtrag kann dadurch gezielt an der Abwinkelung erfolgen. Die so geschaffene Reibfläche und damit auch die von dem Materialabtrag betroffene Fläche ist daher lediglich auf die Abwinkelung beschränkt, so dass sich eine Verbesserung der Schweißverbindung erreichen lässt. Dabei dient die Abwinkelung zugleich dem Schutz des Behälters vor in den Innenraum hineinfallende Partikel oder Schmelzflüssigkeit, indem die Schmelze während des Reibschweißprozesses durch die Abwinkelung nach außen gedrängt wird.

Günstig ist hierbei auch eine Ausführungsform der Erfindung bei der das Gehäuse einen für eine Reibschweißverbindung vorgesehenen Deckel hat. Hierdurch können Einstelltätigkeiten und Kontaktierungen bereits an dem mit dem Behälter verschweißten aber noch unverschlossenen Drucksensor vorgenommen werden. Anschließend wird der Deckel durch Reibschweißen mit dem Gehäuse des Drucksensors verbunden. Dadurch läßt sich eine gegenüber Umwelteinflüssen optimal geschützte, hermetisch geschlossene Baueinheit erreichen, die zugleich mechanisch hoch belastbar ist.

Man könnte sich vorstellen, den Rand mit Unterbrechungen oder Aussparungen zu versehen, die beim Verschweißen aufgrund der Werkstofferweichung geschlossen werden. Eine besonders homogene und haltbare Werkstückverbindung kann aber dadurch vorteilhaft erreicht werden, dass der Rand im Bereich des Umfangs des Gehäuses angeordnet ist und kontinuierlich um dieses umläuft.

Die Erfindung läßt verschiedene Ausführungsformen zu. Zur weiteren Verdeutlichung ihres Grundprinzips sind zwei davon in der Zeichnung dargestellt und werden nachfolgend beschrieben. Diese zeigen in
- Fig. 1: einen senkrechten Schnitt durch ein Gehäuse eines erfindungsgemäßen Drucksensors,
- Fig. 2: einen senkrechten Schnitt durch ein Gehäuse einer anderen Ausführungsform eines Drucksensors.

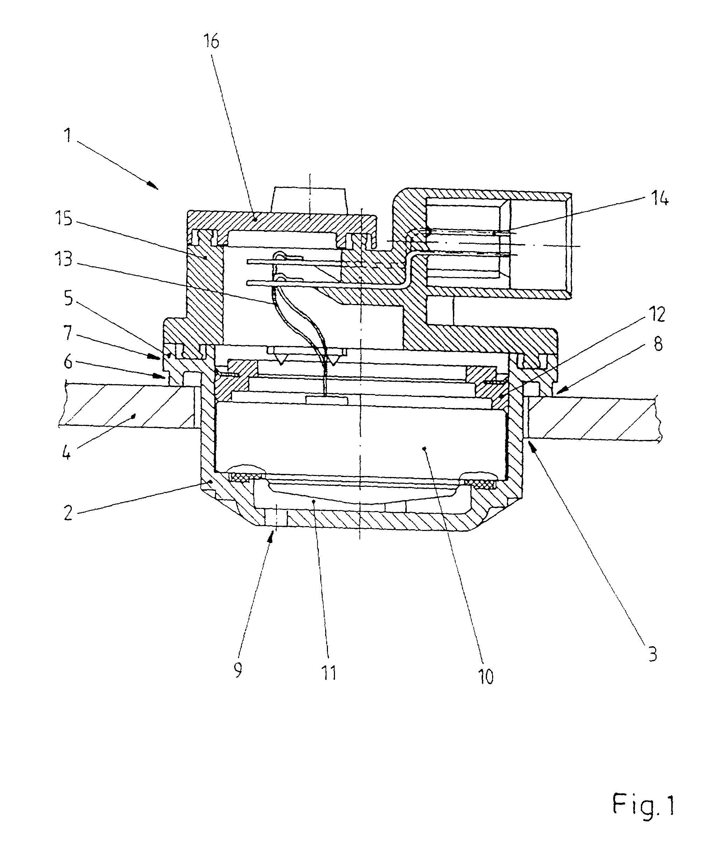

Figur 1 zeigt einen Drucksensor 1, welcher mit seinem Gehäuse 2 in eine Öffnung 3 einer lediglich abschnittsweise dargestellten Behälterwand 4 eingesetzt ist. Hierbei liegt ein mit dem Gehäuse 2 verbundenes und einen Rand 5 mit einer Abwinkelung 6 aufweisendes Haltemittel 7 auf einem Randbereich 8 der Behälterwand 4 auf. Das Gehäuse 2 hat in seinem unteren Abschnitt eine Eintrittsöffnung 9, durch die ein zu messendes Medium in einen durch eine Messzelle 10 begrenzten Messraum 11 eintreten kann. Die Messzelle 10 ist durch ein Haltemittel 12 in dem Gehäuse 2 fixiert und ist mittels einer Kontaktierung 13 mit einem Steckkontakt 14 verbunden. Dieser Steckkontakt 14 ist durch einen Kontaktsockel 15 nach außen geführt und dient dem Anschluss an weitere elektrische Anschlusselemente. Der Kontaktsockel 15 ist mittels eines Deckels 16 verschlossen, welcher nach einem Verschweißen des Gehäuses 2 mit der Behälterwand 4 und dem anschließend gegebenenfalls erforderlichen Abgleich der Messzelle 10 verschweißt wird. In der dargestellten Position ist der Drucksensor 1 lediglich in die Öffnung 3 eingesetzt, aber noch nicht mit der Behälterwand 4 verschweißt. Zum Verschweißen werden der Drucksensor 1 und die Behälterwand 4 relativ zueinander auf einer in etwa dreieckigen Bahn bewegt, so dass die entstehende Reibung zum lokalen Schmelzen der Abwinkelung 6 führt. Durch die erstarrende Schmelze entsteht die Schweißverbindung.

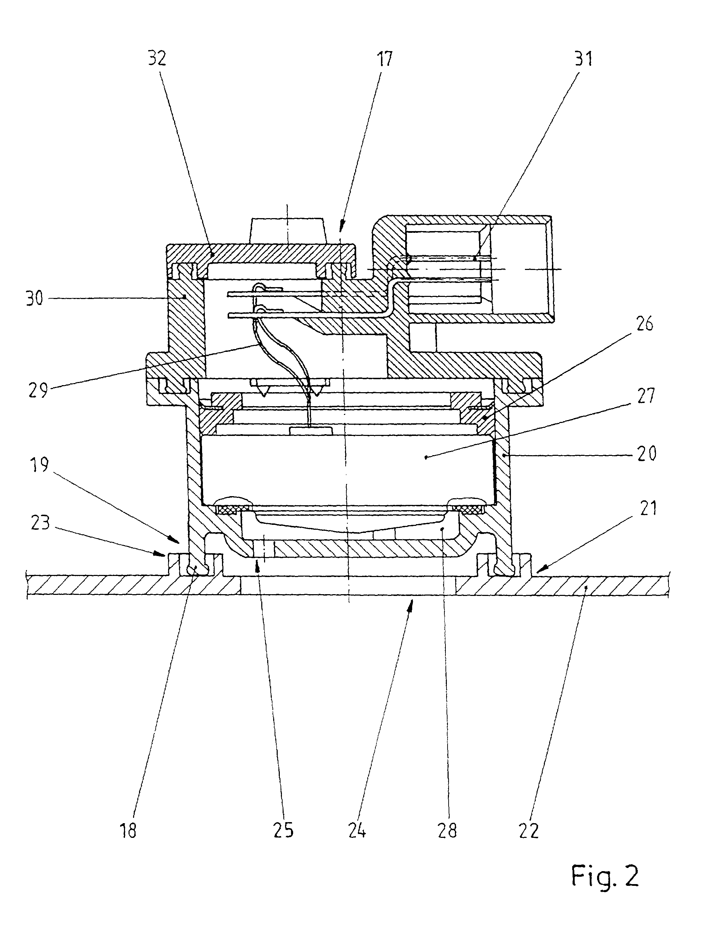

Figur 2 zeigt einen gegenüber dem in Figur 1 dargestellten Drucksensor 1 lediglich geringfügig abgewandelten Drucksensor 17. Dieser ist mit einem Rand 18 eines Haltemittels 19 seines Gehäuses 20 auf einen Randbereich 21 einer lediglich abschnittsweise dargestellten Behälterwand 22 von außen aufgesetzt und mit dieser verschweißt. Der Randbereich 21 hat eine kreisringförmig ausgeführte Aufnahme 23, in die der Rand 18 des Gehäuses 20 eingesetzt ist und die während des Schweißprozesses zum Auffangen der Schmelze und zugleich zur vereinfachten Positionierung des Drucksensors 17 dient. Zu erkennen ist eine geringfügige Verformung des Randes 18, die durch das Erweichen oder Schmelzen des Kunststoffmaterials entsteht. Das zu messende druckbeaufschlagte Medium tritt durch eine Öffnung 24 in der Behälterwand 22 und durch eine Eintrittsöffnung 25 in dem Gehäuse 20 hindurch und gelangt so in einen durch eine mittels eines Haltekörpers 26 fixierte Messzelle 27 begrenzten Messraum 28. Eine Kontaktierung 29 der Messzelle 27 ist mit einem durch einen Kontaktsockel 30 nach außen geführten Steckkontakt 31 verbunden und ermöglicht so den Anschluss an weitere, nicht dargestellte Anschlusselemente. Der Kontaktsockel 30 ist mittels eines Deckels 32 verschlossen, der im Anschluss an die Montage des Drucksensors 17 an der Behälterwand 22 den Zugang zu der Kontaktierung 29 oder der Messzelle 27 ermöglicht.

## Patentansprüche

1. Drucksensor mit einem Gehäuse, welches ein Haltemittel (7,19) zum Fixieren des Drucksensors an einem an einer Öffnung (24) angrenzenden Randbereich einer Behälterwand (22), insbesondere eines Kraftstoffbehälters, aufweist, **dadurch gekennzeichnet, dass** das Haltemittel (7, 19) einen für eine Reibschweißverbindung vorgesehenen, außenseitig an dem Gehäuse (2, 20) angeordneten und gegenüber diesem hervortretenden Rand (5, 18) hat.

2. Drucksensor nach Anspruch 1, **dadurch gekennzeichnet, dass** der Rand (5) am Umfang des Gehäuses (2) angeordnet ist.

3. Drucksensor nach Anspruch 1 oder 2, **dadurch gekennzeichnet, dass** der Rand (5) eine auf die Behälterwand (4) gerichtete Abwinkelung (6) hat.

4. Drucksensor nach einem der vorhergehenden Ansprüche,
**dadurch gekennzeichnet, dass** das Gehäuse (2, 20) einen für eine Reibschweißverbindung vorgesehenen Deckel (16, 32) hat.

5. Drucksensor nach einem der vorhergehenden Ansprüche,
**dadurch gekennzeichnet, daß** der Rand (5, 18) im Bereich des Umfangs des Gehäuses (20) angeordnet ist und kontinuierlich um dieses umläuft.

## Claims

1. Pressure sensor with a casing, which has a mounting means (7, 19) for fixing the pressure sensor on an edge region of a container wall (22), in particular of a fuel tank, adjacent to an opening (24), **characterized in that** the mounting means (7, 19) has an edge (5, 18) intended for a friction-welded joint, arranged on the outside of the casing (2, 20) and protruding from it.

2. Pressure sensor according to Claim 1,
**characterized in that** the edge (5) is arranged on the periphery of the casing (2).

3. Pressure sensor according to Claim 1 or 2,
**characterized in that** the edge (5) has an angled portion (6) directed towards the container wall (4).

4. Pressure sensor according to one of the preceding claims, **characterized in that** the casing (2, 20) has a cover (16, 32) intended for a friction-welded joint.

5. Pressure sensor according to one of the preceding claims, **characterized in that** the edge (5, 18) is arranged in the region of the periphery of the casing (20) and runs continuously around it.

## Revendications

1. Capteur de pression avec un boîtier qui présente un moyen de retenue (7, 19) pour la fixation du capteur de pression sur la bordure, adjacente à une ouverture (24), de la paroi (22) d'un réservoir, en particulier un réservoir à carburant, **caractérisé en ce que** le moyen de retenue (7, 19) présente un bord (5, 18) prévu pour une liaison par soudage par frottement qui est disposé sur le côté extérieur du boîtier (2, 20) et qui débordé par rapport à ce dernier.

2. Capteur de pression selon la revendication 1,
**caractérisé en ce que** le bord (5) est disposé à la périphérie du boîtier (2).

3. Capteur de pression selon la revendication 1 ou 2,
**caractérisé en ce que** le bord (5) présente un rabat (6) dirigé vers la paroi (4) du réservoir.

4. Capteur de pression selon l'une des revendications précédentes, **caractérisé en ce que** le boîtier (2, 20) présente un couvercle (16, 32) prévu pour une liaison par soudage par frottement.

5. Capteur de pression sur l'une des revendications précédentes, **caractérisé en ce que** le bord (5, 18) est disposé dans la région de la périphérie du boîtier (20) et s'étend en continu autour de ce dernier.
